# EUROPÄISCHE PATENTANMELDUNG

(11) **EP 1 162 438 A1**
(43) Veröffentlichungstag der Anmeldung: **12.12.2001**
(21) Anmeldenummer: 01810446.3
(22) Anmeldetag: 08.05.2001
(51) Int. Cl.: G01K 7/06

(54) **Temperatursensor**

(30) Priorität: 09.06.2000 CH 11452000
(71) Anmelder: METEOLABOR AG, CH-8620 Wetzikon (CH)
(72) Erfinder: Ruppert, Paul W., 8620 Wetzikon (CH); Brossi, Thomas, 8494 Bauma (CH)
(74) Vertreter: Rottmann, Maximilian R.

(57) **Zusammenfassung**

Es wird ein Temperatursensor auf der Basis eines durch zwei unterschiedliche Metalle gebildeten Thermoelements vorgeschlagen, bei dem das erste Metall in Form eines elektrisch isolierten Drahtes (2) mit einem isolationsfreien Abschnitt (5) ausgebildet ist. Das zweite Metall ist zumindest teilweise als koaxiale Ummantelung (10) des Drahtes (2) ausgebildet. Die Ummantelung (10) steht über den isolationsfreien Abschnitt (5) mit dem Draht (2) zur Bildung der Messstelle (4) in elektrischem Kontakt. Als Zuleitung ist ein elektrisch isolierter aus Kupfer bestehender Trägerdraht (1) vorgesehen, dessen freies vorderes Ende mit einem blanken Abschnitt (7) versehen ist. Der erste Draht ist um den Trägerdraht (1) herumgewickelt und steht über dessen freies vorderes Ende zur Bildung der Messstelle (4) hervor. Die koaxiale Ummantelung (10) ist bis über den blanken Abschnitt (7) des Trägerdrahts (8) hinausgeführt und steht mit diesem in elektrischem Kontakt. Indem für die koaxiale Ummantelung (10) das gleiche Metall wie für den Trägerdraht (1) gewählt wird -Kupfer-, kann der Trägerdraht (1) zugleich auch als elektrische Zuführleitung benutzt werden. Die koaxiale Ummantelung (10) ist zumindest im Bereich der Messstelle (4) mit einem reflektierenden Überzug versehen.

## Beschreibung

Die Erfindung betrifft einen Temperatursensor nach dem Oberbetrifft des Anspruchs 1.

Zur Messung der Temperatur werden eine Vielzahl von Sensoren, u.a. auch auf der Basis von Thermoelementen, eingesetzt. Da die Temperatur wahrscheinlich die weltweit am häufigsten gemessene Grösse ist, wird nachfolgend beispielhaft eine Problematik beim Messen der Lufttemperatur in der freien Atmosphäre geschildert.

Die Messung der Lufttemperatur scheint bei oberflächlicher Betrachtung ein einfaches Unterfangen zu sein, was es aber in vielen Fällen, wie beispielsweise bei Messungen in höheren Luftschichten, nicht ist. So steigen Radiosonden in Höhen von 30 km und mehr auf, wo die Temperaturmessung durch die kleine Luftdichte erschwert ist. In 30 km Höhe ist der Druck typisch 10 hPa, die Luftdichte also hundertmal kleiner als auf Meereshöhe. Die Sonneneinstrahlung am Tag beträgt ca. 130 mW/cm². Da der zur Messung der Temperatur vorgesehene Temperatursensor der Umgebungsluft ausgesetzt sein muss, erwärmt sich dieser durch die von seiner Oberfläche absorbierte Sonnenstrahlung. Die Radiosonde steigt mit einer Geschwindigkeit von typisch fünf Metern pro Sekunde. Diese Strömung belüftet den Temperatursensor, wodurch ein Teil der Absorptionswärme wieder abgegeben wird. Ausser der Sonnenstrahlung wirkt auch Infrarotstrahlung. In der Nacht strahlt der Temperatursensor in vielen Fällen langwelliges Infrarot ab und wird deshalb abgekühlt. Zusammen mit dem Wärmeübergang an die Umgebungsluft stellt sich in beiden Fällen ein thermisches Gleichgewicht ein. Der Temperatursensor nimmt deshalb nicht die wahre Lufttemperatur an, sondern er misst eine um den Strahlungsfehler verfälschte Temperatur. Die Radiosonde misst deshalb im allgemeinen am Tag zu hohe, in der Nacht zu tiefe Temperaturen. Mit der modernen Computertechnik wird dieser Fehler in der Auswertung am Boden rechnerisch korrigiert. Die Genauigkeit der rechnerischen Korrektur ist aber begrenzt. Zwar ist die direkte Sonnenstrahlung sehr genau bekannt, andere Strahlungseinflüsse wie die Infrarotstrahlung und insbesondere die Reflexion der Sonnenstrahlung an der Erdoberfläche und an den Wolkenobergrenzen, die sogenannte Albedo, variieren jedoch sehr stark und können deshalb nur ungefähr verrechnet werden. Es ist also trotz der rechnerischen Korrekturen ein möglichst kleiner Strahlungsfehler des Temperatursensors anzustreben.

Der Strahlungsfehler des Temperatursensors bzw. der Messstelle wird einerseits von der durch die Anwendung vorgegebenen Strömungsgeschwindigkeit beeinflusst und kann mit folgenden Methoden reduziert werden:
- Kleine Dimensionen des Temperatursensors und insbesondere der Messstelle;
- Hohe Reflektivität der der Strahlung ausgesetzten Oberfläche des Temperatursensors, wirksam für alle Wellenlängen der in der Atmosphäre vorkommenden Licht- und Wärmestrahlung.

Für die heute üblichen Radiosondentemperatursensoren werden Widerstände oder Kondensatoren mit stark ausgeprägter Temperaturabhängigkeit des Widerstandes beziehungsweise der elektrischen Kapazität verwendet. Der Durchmesser der stäbchen- oder kugelförmigen Fühler variiert zwischen 0,2 und 2 mm. Ausserdem sind zur Befestigung und zum elektrischen Anschluss der Fühler Drähte und Rahmen nötig. Diese beeinflussen die Wärmebilanz Strahlung/Konvektion des Fühlers ungünstig, d.h. der Strahlungseffekt wird grösser. Sowohl der Fühler selbst als auch seine Aufhängung werden mit reflektierenden Schichten oberflächenbehandelt. Weisse Lacke oder metallische Ueberzüge kommen zur Anwendung. Als Metalloberfläche wird heute fast ausschliesslich Aluminium verwendet. Nur mit grossen Anstrengungen ist es gelungen, Thermometer in den beschriebenen kleinen Dimensionen herzustellen. Die Widerstands- und Kapazitätsthermometer müssen üblicherweise individuell geeicht werden, um einer Genauigkeit von beispielsweise +/- 0,3 K im Bereich von -90°C bis +50°C zu genügen. Anderseits haben diese Fühler den Vorteil eines relativ grossen Ausschlages, was die elektronische Signalverarbeitung erleichtert. Mit solchen Thermometern muss am Tag in 30 km Höhe mit einem Strahlungsfehler von 1 bis 3 Grad Kelvin gerechnet werden.

Aus einer Veröffentlichung von H. Schmidt "Schnelle, koaxiale Mini-Thermoelemente" (Technisches Messen ATM., Bd. J242-2, Nr. 446, März 1973 Seiten 53.56) sind koaxial aufgebaute Thermoelemente mit einem Aussendurchmesser von < 90 µm bekannt. Dabei wird das eine Thermoelementmetall durch einen quarzglasummantelten Metalldraht gebildet, der in ein Glaskapillarrohr eingeschoben und darin eingeschmolzen ist. Der Metalldraht steht einige Millimeter aus diesem Glaskapillarrohr hervor. Das Glaskapillarrohr ist zusammen mit dem Metalldraht in ein Metallrohr eingebracht, welches durch lonenplasmazerstäubung auf das Glas aufgetragen wird, so dass eine elektrische Verbindung zwischen dem Metallrohr und dem hervorstehenden Ende des Metalldrahts entsteht. Diese Verbindungsstelle bildet die eigentliche Messstelle.

Aus der FR 2 108 462 ist ein Thermoelement bekannt, bei dem das eine, das Thermoelement bildende Metall als Taylor-Draht ausgebildet und in ein Glas-Kapillarrohr eingeschmolzen ist. Das andere, das Thermoelement bildende Metall ist als koaxiale Ummantelung des Glas-Kapillarrohrs ausgebildet. Der in das Glas-Kapillarrohr eingeschmolzene Taylor-Draht ragt etwas aus dem Glas-Kapillarrohr hervor, so dass an der Berührungsstelle mit der Ummantelung die thermoelektrisch wirksame Mess-stelle entsteht.

Aus der FR 1 276 557 ist ein weiteres, koaxial aufgebautes Thermoelement bekannt, das auf der Basis von Eisen und Konstantan aufgebaut und mit einer punktförmig verschweissten Messstelle versehen ist.

In der FR 988 103 ist ebenfalls ein koaxial aufgebautes Thermoelement offenbart, bei welchem der zentrale Leiter durch eine pulverförmiges Isoliermaterial gegenüber dem ihn umgebenden rohrförmigen Leiter isoliert ist. Am hinteren Ende dieses Thermoelements sind Lötstellen zum Fixieren von Anschlussdrähten vorgesehen.

In der US 3 343 589 sind ein Verfahren zum Herstellen von Thermoelementen sowie nach dem Verfahren hergestellte Thermoelemente offenbart. Dabei wir ein koaxial aufgebautes Thermoelement vorgeschlagen, das mit einem zentralen Draht und einem den Draht umschliessenden, rohrförmigen Leiter versehen ist. Zur Positionierung des Drahtes innerhalb des rohrförmigen Leiters ist ein rohrförmiger Isolator vorgesehen, wobei der Draht an der Spitze des Thermoelements zur Bildung der Mess-stelle mit dem rohrförmigen Leiter in elektrischem Kontakt steht.

Die EP 0 570 239 offenbart ein Thermoelement, das aus verschiedenen isolierenden und leitenden Schichten aufgebaut ist. Dabei ist ein zentraler Draht vorgesehen, der mit einer Isolierschicht versehen ist. Auf diese Isolierschicht ist eine leitende Schicht aufgebracht, welche im Bereich des Drahtendes zur Bildung der Messstelle in elektrischem Kontakt mit dem Draht steht. Am hinteren Ende des Thermoelements sind ringförmige Lötstellen vorgesehen, an welchen die Anschlussdrähte mittels einer Lötverbindung fixierbar sind.

Aus der EP 0 140 631 ist ein Thermoelement bekannt, bei dem ein zentraler Leiter und ein ihn umgebender Mantel vorgesehen ist, wobei der zentrale Leiter am vorderseitigen Ende zur Bildung einer Messstelle mit dem Mantel verschweisst ist. Der zentrale Leiter besteht dabei mehrheitlich aus Kupfer, während der ihn umgebende Mantel weitgehend durch ein kupferfreies Material gebildet wird. Die Schweissnaht soll weniger als 10 Gewichtsprozent Kupfer enthalten.

Schliesslich ist aus dem Artikel "Thermoelemente mit einer Ansprechzeit von einer Mikrosekunde" (MTZ Motortechnische Zeitschrift Bd. 31, Nr. 7, Juli 1970 Seite 329) ein koaxial aufgebautes Thermoelement bekannt, das aus einem inneren Thermodraht und einem äusseren, in Form eines Röhrchens ausgebildeten Thermodraht besteht. Die eigentliche Messstelle wird durch ein vakuumaufgedampftes Plättchen gebildet.

Eine grundsätzliche Problematik bei allen vorgängig beschriebenen Ausführungsbeispielen von Thermoelementen besteht darin, dass sie relativ kompliziert aufgebaut und entsprechend aufwendig in der Herstellung sind und dass zumindest das eine der beiden das Thermoelement bildenden Metalle, zumeist die koaxiale Ummantelung, mit einer Anschlussstelle versehen werden muss. Derartige Anschlussstellen sind jedoch unerwünscht, da sie die Gefahr der Entstehung von parasitären Thermospannungen mit sich bringen.

Die Aufgabe der vorliegenden Erfindung besteht nun darin, einen gemäss dem Oberbegriff des Anspruchs 1 ausgebildeten Temperatursensor auf der Basis eines Thermoelements zu schaffen, der einfach aufgebaut ist und direkt an eine Auswerte-Elektronik anschliessbar ist, der eine hohe Messgenauigkeit ermöglicht und bei dem insbesondere die Messstelle im Sinne der eingangs erläuterten Problematik möglichst klein dimensioniert sein soll.

Diese Aufgabe wird durch im Kennzeichen des Anspruchs 1 angeführten Merkmale gelöst.

Die der Erfindung zugrunde liegende Idee besteht zum einen darin, das erste Metall in Form eines elektrisch isolierten Drahtes mit einem isolationsfreien Abschnitt und das zweite Metall zumindest teilweise als koaxiale Ummantelung des Drahtes auszubilden, wobei die Ummantelung über den isolationsfreien Abschnitt mit dem Draht zur Bildung der Messstelle in elektrischem Kontakt steht. Auf diese Weise kann ein Thermoelement mit einer sehr kleinen Messstelle und einer geringen Masse geschaffen werden. Zum anderen wird vorgeschlagen, die koaxiale Ummantelung zumindest bis an einen blanken Abschnitt eines aus dem gleichen Metall wie die koaxiale Ummantelung bestehen Trägerdrahts heranzuführen. Damit kann auf einfache Weise eine elektrische Verbindung zwischen der koaxialen Ummantelung und dem Trägerdraht hergestellt werden, wobei die Gefahr von parasitären Thermospannungen eliminiert ist und der Trägerdraht direkt als Anschlussdraht zum Verbinden mit einer Auswerte-Elektronik verwendet werden kann.

Bei der beschriebenen Messstelle des Thermoelements ist der durch Strahlung bedingte Fehler bedeutend kleiner, als wenn auf herkömmliche Weise zwei Drähte verwendet werden, deren Enden zur Bildung der Messstelle miteinander verlötet oder verschweisst sind. Ausserdem reagiert der Temperatursensor, bedingt durch die kleine Masse, sehr rasch auf Temperaturänderungen, was insbesondere bei geringer Luftdichte von entscheidendem Vorteil sein kann. Dadurch ist er beispielsweise für den Einsatz in Radiosonden, welche in grosse Höhen aufsteigen, prädestiniert.

Ein Ausführungsbeispiel der Erfindung wird nachfolgend anhand einer Zeichnung näher erläutert. In dieser Zeichnung zeigt:
Fig. 1 den Temperatursensor in einer schematischen Darstellung;
Fig. 2 eine vergrösserte Darstellung des Vorderteils des Temperatursensors während der Fertigungsphase, und
Fig. 3 eine vergrösserte Darstellung des Vorderteils des Temperatursensors im fertigen Zustand.

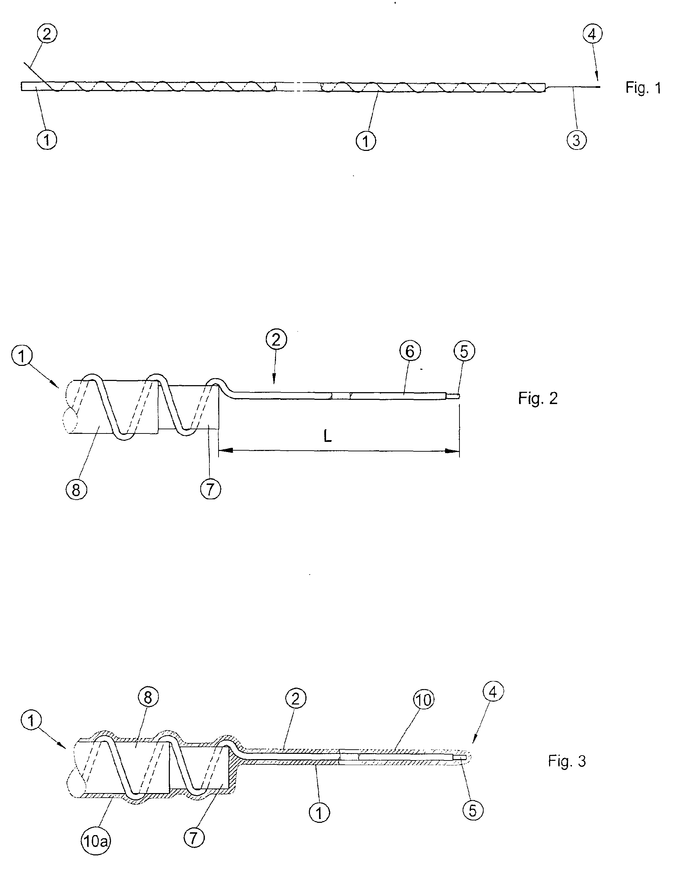

Fig. 1 zeigt eine Ausführungsform eines Temperatursensors in schematischer Darstellung, wie er beispielsweise für den Einsatz in Radiosonden vorgesehen sein kann. Ein gerader Abschnitt eines elektrisch isolierten Kupferdrahts 1 dient als mechanische Trägerbasis für einen aus Kupfernickel (Konstantan) bestehenden Draht 2, der ebenfalls elektrisch isoliert ist und um den Trägerdraht 1 herumgewickelt ist. Unter elektrischer Isolation ist im vorliegenden Fall eine elektrisch isolierende Ummantelung des jeweiligen Drahtes 1, 2, beispielsweise in Form einer Lackschicht, zu verstehen. Der Konstantandraht 2 überragt den Trägerdraht 1 an seinem vorderen freien Ende um einige Zentimeter, wobei der den Trägerdraht 1 überragende Bereich 3 des Konstantandrahts 2 gestreckt ausgebildet ist. Im Bereich des freien vorderen Endes des Konstantandrahts 2 wird die Messstelle 4 gebildet. Die beiden Drähte können mit ihren hinteren Enden direkt an eine Auswerte-Elektronik (nicht dargestellt) angeschlossen werden. Vorzugsweise beträgt der Durchmesser des Trägerdrahts 1 ein Mehrfaches des Durchmessers des Konstantandrahts 2, so dass ersterer wie dargestellt als mechanischer Träger für den Konstantandraht 2 verwendet werden kann.

Fig. 2 zeigt eine vergrösserte Darstellung des Vorderteils des noch nicht fertiggestellten Temperatursensors. Der mit einer Isolation 6 versehene Konstantandraht 2 weist an seinem freien vorderen Ende einen isolationsfreien Abschnitt 5 auf, an dem die Isolation 6 entfernt bzw. weggelassen wurde. Ebenso ist der Trägerdraht 1 am freien vorderen Ende mit einem blanken Abschnitt 7 versehen, an dem die Isolation 8 entfernt wurde. Die Länge L des geraden Abschnitts des Konstantandrahts 2 beträgt im vorliegenden Fall einige Zentimeter, sie kann jedoch den Vorgaben und Randbedingungen entsprechend variieren. Da der Konstantandraht 2 mit einer Isolation 8 versehen ist wird sichergestellt, dass auch im Bereich des blanken Abschnitts 7 des Kupferdrahts 1 kein elektrischer Kontakt zwischen den beiden Drähten 1, 2 besteht.

Fig. 3 zeigt den Vorderteil des Temperatursensors gemäss Fig. 2 im fertigen Zustand. Aus dieser Darstellung ist ersichtlich, dass der Konstantandraht 2 mit einer koaxialen Ummantelung 10, 10a versehen ist, welche sich sowohl über den gestreckten Teil des Konstantandrahts wie auch über das freie Ende des Trägerdrahts 1 hinweg bis über dessen Isolation 8 erstreckt. Die ebenfalls aus dem gleichen Metall wie der Trägerdraht 1 -Kupfer- bestehende Ummantelung 10, 10a stellt eine elektrische Verbindung zwischen der isolationsfreien und der blanken Stelle 5, 7 der beiden Drähte her. Gleichzeitig wird am freien Ende des Konstantandrahts 2 durch den elektrischen Kontakt zwischen dem Konstantandraht 2 und der Ummantelung 10 die Messstelle 4 gebildet.

Über der Ummantelung 10 aus Kupfer ist zusätzlich eine hochreflektierende Schicht (nicht dargestellt) angebracht, welche die Absorption von Strahlung am Tag verkleinert und die Abstrahlung von Infrarotstrahlung in der Nacht behindert. Diese Schicht kann beispielsweise aus einem weissen Lack, aus Aluminium oder einem Edelmetall bestehen.

Indem nicht in klassischem Sinne zwei Drähte zur Bildung der Messstelle 4 verwendet werden, sondern das eine Metall in Form eines elektrisch isolierten Drahtes 2 mit einem isolationsfreien Abschnitt 5 ausgebildet ist und das zweite Metall als koaxiale Ummantelung 10 des Drahtes 2 ausgebildet ist, welche Ummantelung 10 über den isolationsfreien Abschnitt 5 mit dem Draht 2 zur Bildung der Messstelle 4 in elektrischem Kontakt steht, wird ein Temperatursensor in Form eines Thermoelements geschaffen, der sehr klein ist und keine Schweiss- oder Lötarbeit zum elektrischen Verbinden der beiden Metalle notwendig ist. Indem für die koaxiale Ummantelung 10 das gleiche Metall wie für den Trägerdraht 1 (Kupfer) gewählt wird, kann der Trägerdraht 1 zugleich auch als elektrische Zuführleitung benutzt werden, ohne dass an der elektrischen Kontaktstelle (blanker Abschnitt 7) zwischen Ummantelung 10 und Trägerdraht 1 ein weiteres (parasitäres) Thermoelement gebildet wird.

Da die Messstelle 4 am freien Ende des Konstantandrahtes 2 angeordnet ist, bietet der Temperatursensor auch strömungstechnische Vorteile, indem die Messstelle 4 von der Luft ideal umströmt werden kann. Da Drähte in Durchmessern von bis zu 10 Mikrometern hergestellt werden können, ist der Bau von sehr feinen Temperatursensoren bzw. Thermoelementen möglich. Der Durchmesser wird letztlich weitgehend durch jenen des Konstantandrahts 2 bestimmt. Die Ummantelung 10, 10a ist in Dünnfilmtechnik aufgebracht.

Es versteht sich, dass der vorgängig beschriebene Temperatursensor beispielhaften Charakter besitzt und keinesfalls als abschliessend zu betrachten ist. Beispielsweise könnte die Paarung der beiden das Thermoelement bildenden Metalle geändert werden.

Die Messstelle muss auch nicht zwingend am freien Ende des Konstantandrahts 2 angeordnet werden, sondern ebenso könnte im gestreckten Abschnitt 3 des Konstantandrahtes 2 eine blanke Stelle zur Bildung der Messstelle vorgesehen werden, so dass der Konstantandraht 2 an seinem freien Ende mechanisch fixiert werden könnte.

Mit dem beschriebenen Temperatursensor dieser Bauart ist der Strahlungsfehler bedeutend kleiner als bei den heute üblichen Thermoelementen. Ausserdem hat der Temperatursensor wegen der kleinen Masse der Messstelle eine sehr kurze Zeitkonstante und reagiert damit gut auf rasche Temperaturänderungen der Umgebungsluft. Mit aufeinander abgestimmten Herstellungsverfahren können Temperatursensoren gebaut werden, die ohne individuelle Eichung eine Genauigkeit von besser als +/- 0,1 K im Bereich von +/- 100°C erreichen.

Die Konstruktion verbessert beispielsweise die Genauigkeit der Radiosondenthermometrie um einen Faktor fünf bis zehn.

Dem Einsatz von erfindungsgemäss ausgebildeten Temperatursensoren auch auf völlig anderen als dem beschriebenen Gebiet steht nichts im Weg. Nebst der Anwendung in Radiosonden sind beispielsweise auch Anwendungen in der Medizin, Biologie, Physik, Chemie usw. denkbar.

## Patentansprüche

1. Temperatursensor auf der Basis eines durch zwei unterschiedliche Metalle gebildeten Thermoelements, wobei das erste Metall in Form eines elektrisch isolierten Drahtes (2) mit einem isolationsfreien Abschnitt (5) und das zweite Metall zumindest teilweise als koaxiale Ummantelung (10) des Drahtes (2) ausgebildet ist, und wobei die Ummantelung (10) über den isolationsfreien Abschnitt (5) mit dem Draht (2) zur Bildung der Messstelle (4) in elektrischem Kontakt steht, **dadurch gekennzeichnet, dass** ein mit einem blanken Abschnitt (7) versehener, elektrisch isolierter Trägerdraht (1) vorgesehen ist, der aus dem gleichen Metall wie die koaxiale Ummantelung (10) besteht, und dass die koaxiale Ummantelung (10) zumindest bis an den blanken Abschnitt (7) des Trägerdrahts (1) herangeführt ist und mit diesem in elektrischem Kontakt steht.

2. Temperatursensor nach Anspruch 1, **dadurch gekennzeichnet, dass** der erste Draht (2) um den Trägerdraht (1) herumgewickelt ist und über dessen freies vorderes Ende zur Bildung der Messstelle (4) hervorsteht.

3. Temperatursensor nach Anspruch 2, **dadurch gekennzeichnet, dass** der Durchmesser des Trägerdrahts (1) ein Mehrfaches des Durchmessers des ersten Drahts (2) beträgt.

4. Temperatursensor nach einem der vorhergehenden Ansprüche, **dadurch gekennzeichnet, dass** der blanke Abschnitt (7) am freien vorderen Ende des Trägerdrahts (1) angeordnet ist.

5. Temperatursensor nach einem der vorhergehenden Ansprüche, **dadurch gekennzeichnet, dass** die koaxiale Ummantelung (10) zumindest im Bereich der Messstelle (4) mit einem reflektierenden Überzug versehen ist.

6. Temperatursensor nach Anspruch 5, **dadurch gekennzeichnet, dass** der reflektierende Überzug weitgehend aus Aluminium, aus einer Aluminiumlegierung oder einem Edelmetall besteht.

7. Temperatursensor nach einem der vorhergehenden Ansprüche, **dadurch gekennzeichnet, dass** die koaxiale Ummantelung (10, 10a) über den blanken Abschnitt (7) des Trägerdrahts (1) hinaus weitergeführt ist.

8. Temperatursensor nach einem der vorhergehenden Ansprüche, **dadurch gekennzeichnet, dass** der isolationsfreie Abschnitt (5) am freien Ende des das erste Metall bildenden Drahtes (2) angeordnet ist.

9. Temperatursensor nach einem der vorhergehenden Ansprüche, **dadurch gekennzeichnet, dass** die zumindest teilweise koaxiale Ummantelung (10) in Dünnfilmtechnik aufgebracht ist.

10. Temperatursensor nach einem der vorhergehenden Ansprüche, **dadurch gekennzeichnet, dass** das erste in Form eines elektrisch isolierten Drahtes (2) ausgebildete Metall Konstantan ist.

11. Temperatursensor nach einem der vorhergehenden Ansprüche, **dadurch gekennzeichnet, dass** die Ummantelung (10) aus Kupfer besteht.

12. Temperatursensor nach einem der Ansprüche 1 bis 10, **dadurch gekennzeichnet, dass** sowohl der Trägerdraht (1) wie auch die Ummantelung (10) aus Kupfer bestehen.
